**Europäisches Patentamt**

**European Patent Office**

**Office européen des brevets**

(19)

(11) Veröffentlichungsnummer: **0 382 131 B1**

## (12) EUROPÄISCHE PATENTSCHRIFT

(45) Veröffentlichungstag der Patentschrift:
30.10.91 Patentblatt 91/44

(51) Int. Cl.$^5$: **G01D 21/02**

(21) Anmeldenummer: **90102181.6**

(22) Anmeldetag: **03.02.90**

---

(54) Schaltung zur Erfassung von Messwerten eines Geschosses.

(30) Priorität: **09.02.89 DE 3903802**

(43) Veröffentlichungstag der Anmeldung:
**16.08.90 Patentblatt 90/33**

(45) Bekanntmachung des Hinweises auf die
Patenterteilung:
**30.10.91 Patentblatt 91/44**

(84) Benannte Vertragsstaaten:
**CH DE FR GB LI**

(56) Entgegenhaltungen:
**GB-A- 961 190
GB-A- 1 485 656
GB-A- 2 177 213**

(73) Patentinhaber: **GEBRÜDER JUNGHANS
GMBH
Geisshaldenstrasse
W-7230 Schramberg (DE)**

(72) Erfinder: **Müller, Jürgen
Terra Wohnpark 7
W-7730 VS-Villingen (DE)**

(74) Vertreter: **Hofmann, Gerhard, Dipl.-Ing.
Patentassessor
Stephanstrasse 49
W-8500 Nürnberg 30 (DE)**

**Beschreibung**

Die Erfindung betrifft eine Schaltung zur Erfassung von Meßwerten verschiedener physikalischer Größen, wie beispielsweise Drehzahl, Beschleunigung, Temperatur, Gasdruck, denen ein Geschoß in unzugänglichen Waffeneinrichtungen ausgesetzt ist.

Für die Entwicklung von Munition ist es wichtig, die Werte verschiedener physikalischer Größen zu kennen, denen ein Geschoß in Waffeneinrichtungen, wie der Zuführeinrichtung und dem Waffenrohr, ausgesetzt ist. Diese Waffeneinrichtungen sind weitgehend unzugänglich, so daß es in der Praxis kaum möglich ist, dort entsprechende Meßeinrichtungen anzuordnen. Im übrigen wäre dies auch ungünstig, da dann die Waffe in geeigneter Weise umgebaut werden müßte.

Aufgabe der Erfindung ist es, eine Schaltung der eingangs genannten Art vorzuschlagen, durch die sich ein Umbau der Waffe erübrigt.

Erfindungsgemäß ist obige Aufgabe dadurch gelöst, daß in dem Geschoß angeordnete Sensoren die Meßwerte erfassen, daß die Meßwerte über einen A/D-Wandler in Speicherplätze eines Speichers des Geschosses im Takt eingeschrieben und zyklisch überschrieben werden, daß dann, wenn der Meßwert eines ausgewählten Sensors einen Sollwert erreicht, ein Vorzähler in dem Takt, beginnend bei einem voreingestellten Zählerstand, bis zum Übertrag weiterschaltet, daß das Erreichen des Übertrags das Einschreiben von Meßwerten in den Speicher beendet und daß anschließend die in den Speicherplätzen gespeicherten Meßwerte über eine Sendeantenne eines Senders des Geschosses nacheinander abgesendet werden.

Die Sensoren sind so ausgelegt, daß sie auf das Geschoß einwirkende Belastungen, wie beispielsweise Beschleunigungen, bei Drallgeschossen die Drehzahl, die am Geschoß auftretende Temperatur und/oder den beim Abschuß auftretenden Gasdruck, erfassen. Nach Analog/Digital-Wandlung werden die Meßwerte in die Speicherplätze des Speichers eingeschrieben. Vorzugsweise sind wesentlich mehr Speicherplätze als Sensoren vorgesehen, so daß nicht nur einzelne Meßwerte einer der Größen, sondern zeitliche Verläufe der Größen gespeichert werden können. Solange das Geschoß sich in der Zuführeinrichtung und im Waffenrohr befindet, werden die Speicherplätze im Takt zyklisch überschrieben, da die Anzahl der Speicherplätze begrenzt ist. Die Speicherplätze sind dadurch ständig mit aktuellen Daten belegt.

Je nach Geschoßtyp ist ein Sensor ausgewählt, der eine für diesen Geschoßtyp charakteristische Größe oder eine für die geplante Meßreihe charakteristische Größe erfaßt. Dieser ausgewählte Sensor schaltet dann, wenn der von ihm erfaßte Meßwert einen Sollwert erreicht, den Vorzähler ein, wonach dieser im Takt bis zu seinem Zählerendstand (Übertrag) fortzählt. Während dieser Zeit werden die von den Sensoren erfaßten Meßwerte weiter in Speicherplätze übertragen. Der Vorzähler ist so ausgelegt, daß er seinen höchsten Zählerstand vor dem Übertrag erreicht, wenn in den letzten Speicherplatz ein Meßwert eingeschrieben wird. Vorzugsweise hat der Vorzähler ebensoviel mögliche Zählschritte wie der Speicher Speicherplätze. Ist der Übertrag des Zählers erreicht, dann wird dadurch ein weiteres Einschreiben von Meßwerten in den Speicher beendet. Der Speicher enthält damit Meßwerte, die vor dem Auftreten des charakteristischen Sollwertes erfaßt wurden und Meßwerte, die danach bis zum Beendigen des Abspeicherns eintraten. Die Voreinstellung des Zählerstandes des Vorzählers wird dabei je nach der jeweiligen Meßaufgabe so gewählt, daß nach dem Eintreten des charakteristischen Sollwerts noch die gewünschte Anzahl von Meßwerten bis zum Füllen des Speichers erfaßt wird.

Nach dem Beendigen der Speicherung von Meßwerten werden die gespeicherten Meßwerte vom Geschoß ausgesendet. Das Aussenden der gespeicherten Meßwerte erfolgt vorzugsweise in mehreren Zyklen, beispielsweise drei- oder viermal.

Zur Erfassung der vom Geschoß gesendeten Meßwerte ist ein Empfänger auf die Flugbahn des Geschosses vor dem Waffenrohr gerichtet. Dieser erfaßt die gesendeten Meßwerte und setzt diese entsprechend um. Da empfängerseitig der ausgewählte Sollwert und der voreingestellte Zählerstand bekannt sind, ist eine Zuordnung der empfangenen Meßwerte zu den von den Sensoren erfaßten Meßwerten möglich. Damit liegt empfängerseitig eine Meßwertfolge der am Geschoß zuvor, also in der Zuführeinrichtung und im Waffenrohr, aufgetretenen Meßwerte der physikalischen Größen vor. Diese Meßwertfolge wird für die Weiterentwicklung der Munition analysiert.

Günstig ist bei der Erfindung, daß die Schaltung im Geschoß selbst unterbringbar ist. Dadurch erübrigt es sich, die Waffe selbst mit Sensoren zu versehen. Besonders vorteilhaft ist, daß sich die Schaltung durch Auswählen eines charakteristischen Sensors für verschiedene Geschoßtypen verwenden läßt und daß durch das Auswählen eines der Sensoren als charakteristisch und die vorherige Stellung des Zählerstandes des Vorzählers sich die verschiedensten Meßwertfolgen erzeugen und empfängerseitig erfassen lassen.

In bevorzugter Weiterbildung der Erfindung schaltet der Takt einen Kanalzähler weiter, der über einen weiteren Speicher eine Zuordnung der von den Sensoren erfaßten Meßwerten zu den Speicherplätzen des oben genannten Speichers festlegt.

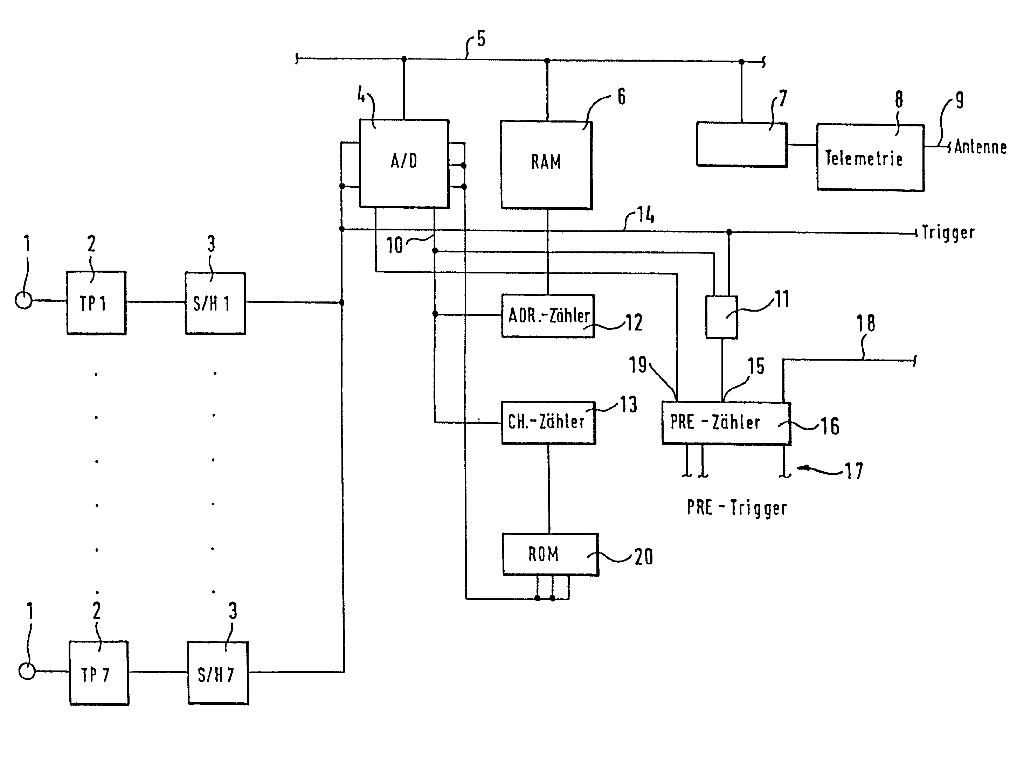

Weitere vorteilhafte Ausgestaltungen der Erfindung ergeben sich aus der folgenden Beschreibung eines Ausführungsbeispiels. Die Figur zeigt ein Blockschaltbild einer in einem Geschoß untergebrachten Schaltung.

In einem Geschoß sind sieben Sensoren (1) angeordnet. Je einer der Sensoren (1) ist ausgelegt für die Erfassung der drallbedingten Drehzahl des Geschosses, der Temperatur, des Gasdruckes und des Auftreffens des Schlagbolzens der Waffe auf das Geschoß. Drei Sensoren (1) sind zur Erfassung der Beschleunigung des Geschosses in den drei Raumrichtungen ausgelegt. Die Sensoren (1) sind jeweils über einen Tiefpaß (2) und einen Verstärker (3) an einen Analog/Digital-Wandler (4) angeschlossen, der mit einem Multiplexer versehen ist. Der Wandler (4) ist ausgangsseitig über einen Datenbus (5) mit einem RAM-Speicher (6) verbunden. Am Datenbus (5) liegt außerdem ein Dekoder (7), dem ein Telemtrie-Sender (8) nachgeschaltet ist. Der Sender (8) speist eine Antenne (9), die außen am Geschoß angeordnet ist.

Der Wandler (4) weist eine Taktleitung (10) auf, die an einem Flipflop (11), einem Adressenzähler (12) und einem Kanalzähler (13) liegt.

Das Flipflop (11) ist außerdem eingangsseitig über eine Leitung (14) mit einem der einem der Sensoren (1) nachgeschalteten Verstärker (3) verbunden. Es ist auswählbar, mit welchem der Sensoren (1) über die Leitung (14) das Flipflop (11) verbunden ist. Ausgangsseitig ist das Flipflop (11) an einen Eingang (15) eines Vorzählers (16) angeschlossen. Der Eingang (15) ist der den Vorzähler (16) um jeweils einen Zählschritt fortschaltende Eingang.

Der Wandler (4) wandelt die an ihm anstehenden Analogsignale in 8-Bit-Informationen um. Der Speicher (6) hat 32 K Speicherplätze. Dementsprechend beträgt die Anzahl der Zählschritte bis zum Übertrag ebenfalls 32 K. Der Vorzähler (16) ist mit Eingängen (17) versehen, an denen sich beispielsweise über Lötbrücken, am Geschoß voreinstellen läßt, bei welchem Zählerstand der Vorzähler (16) zu zählen beginnen soll. Ein Preset-Eingang (18) des Vorzählers (16) dient zu dessen Initiierung. Die Anzahl der Speicherplätze des Speichers (6) ist gleich der Anzahl der maximal möglichen Zählschritte des Vorzählers (16).

Der Vorzähler (16) ist über einen Ausgang (19) an den Wandler (4) angeschlossen. Am Ausgang (19) liegt ein Signal an, wenn der Zählerendstand des Vorzählers (16) erreicht ist, an diesem also der Übertrag eintritt. Durch ein Signal am Ausgang (19) wird der weitere Betrieb des Wandlers (4) unterbrochen, so daß danach kein digitalisierter Meßwert mehr in den Speicher (6) übertragen wird.

Der Adressenzähler (12) ist ausgangsseitig in der Weise mit dem Speicher (6) verbunden, daß er den Speicher (6) bei jedem Taktsignal zur Aufnahme eines weiteren Meßwerts in den nächstfolgenden Speicherplatz fortschaltet. Diese Fortschaltung erfolgt zyklisch, so daß gegebenenfalls zuvor beschriebene Speicherplätze mit neuen Meßwerten überschrieben werden.

Der Kanalzähler (13) schaltet einen ROM-Speicher (20) weiter. Der Speicher (20) ordnet die von den Sensoren (1) erfaßten Meßwerte den Speicherplätzen des Speichers (6) in einer bestimmten Weise zu.

Die Funktionsweise der beschriebenen Schaltung des Geschosses ist im wesentlichen folgende :

An der Schaltung des Geschosses wird zunächst eingestellt, welcher der Sensoren (1) für die gewünschte Meßfolge als charakteristisch zu betrachten ist. Der entsprechende Sensor (1) wird an die Leitung (14) angeschlossen. Außerdem wird der Vorzähler (16) auf einen Wert voreingestellt, der festlegt, wie viele Meßwerte vor bzw. nach dem Auftreten des Sollwertes des ausgewählten Sensors (1) erfaßt werden sollen. Anschließend wird die Schaltung an eine im Geschoß vorgesehene Spannungsversorgung gelegt.

Solange sich das Geschoß in der Zuführeinrichtung oder im Waffenrohr — vor dem Eintreten des Sollwerts — befindet, schaltet der Takt des Wandlers (4) über die Taktleiter (10) den Adresszähler (12) und den Kanalzähler (13) weiter, so daß die erfaßten Meßwerte der Sensoren (1) in die Speicherplätze des Speichers (6) eingeschrieben werden. Sind die Speicherplätze gefüllt, dann werden sie anschließend zyklisch mit neuen Meßwerten überschrieben.

Wenn am ausgewählten Sensor (1) der bestimmte Sollwert auftritt, wird das Flipflop (11) so umgeschaltet, daß der Takt der Taktleitung (10) auch an dem Eingang (15) des Vorzählers (16) liegt. Dieser beginnt dann ab dem Zählerstand weiterzuzählen, der über die Eingänge (17) voreingestellt wurde. Während des Fortzählens des Vorzählers (16) werden weiterhin die jeweiligen Meßwerte in die betreffenden Speicherplätze des Speichers (6) eingeschrieben. Auch die Meßwerte des ausgewählten Sensors (1) werden in dem Speicher (6) abgelegt.

Erreicht der Vorzähler (16) seinen Zählerendstand, dann wird über den Ausgang (19) die Wandlung des Wandlers (4) abgebrochen, so daß in den Speicher (6) keine weiteren Meßwerte eingeschrieben werden. Der Speicher (6) gibt nun die in ihm gespeicherten Meßwerte über den Dekoder (7) an den Sender (8). Sobald das Geschoß das Waffenrohr verläßt, wird die entsprechende Meßsignalfolge von einem nicht näher dargestellten Empfänger erfaßt und in diesem ausgewertet.

**Patentansprüche**

1. Schaltung zur Erfassung von Meßwerten verschiedener physikalischer Größen, wie z.B. Drehzahl, Beschleunigungen, Temperatur, Gasdruck, denen ein Geschoß in unzugänglichen Waffeneinrichtungen ausgesetzt ist, dadurch gekennzeichnet, daß in dem Geschoß angeordnete Sensoren (1) die Meßwerte erfassen, daß die Meßwerte über einen A/D-Wandler (4) in Speicherplätze eines Speichers (6) des Geschosses im Takt eingeschrieben und zyklisch überschrieben werden, daß dann, wenn der Meßwert eines ausgewählten Sensors (1) einen Sollwert erreicht, ein Vorzähler (16) in dem Takt, beginnend bei einem voreingestellten Zählerstand, bis zum Übertrag weiterschaltet, daß das Erreichen des Übertrags das Einschreiben von Meßwerten in den Speicher (6) beendet und daß anschließend die in den Speicherplätzen gespeicherten Meßwerte über eine Sendeantenne (9) eines Senders (8) des Geschosses nacheinander abgesendet werden.

2. Schaltung nach Anspruch 1, dadurch gekennzeichnet, daß der Takt einen Kanalzähler (13) weiterschaltet, der über einen weiteren Speicher (20) eine Zuordnung der von den Sensoren (1) erfaßten Meßwerte zu den Speicherplätzen des Speichers (6) festlegt.

3. Schaltung nach Anspruch 1 oder 2, dadurch gekennzeichnet, daß die Anzahl der Speicherplätze des Speichers (6) auf die Anzahl der Sensoren (1) abgestimmt ist und die Anzahl der Speicherplätze des Speichers (6) wesentlich größer ist als die Anzahl der Sensoren (1).

4. Schaltung nach einem der vorhergehenden Ansprüche, dadurch gekennzeichnet, daß die Anzahl der maximal möglichen Zählschritte des Vorzählers (16) gleich der Anzahl der Speicherplätze des Speichers (6) ist.

## Claims

1. A circuit for detecting measured values of different physical variables, such as e.g. rotational speed, accelerations, temperature, gas pressure, to which a projectile is exposed in inaccessible weapon mechanisms, characterised in that sensors (1) arranged in the projectile detect the measured values, in that the measured values are written in time by way of an A/D converter (4) into storage places of a store (6) of the projectile and cyclically transferred, in that when the measured value of a selected sensor (1) reaches a desired value a precounter (16) steps on in time, beginning at a preset counter state, until the carry, in that the reaching of the carry terminates the writing of measured values into the store (6) and in that then the measured values stored in the storage places are despatched successively by way of a transmitting antenna (9) of a transmitter (8) of the projectile.

2. A circuit according to claim 1, characterised in that the timing steps on a channel counter (13), which by way of a further store (20) determines a correlation of the measured values detected by the sensors (1) with the storage places of the store (6).

3. A circuit according to claim 1 or 2, characterised in that the number of storage places of the store (6) is correlated with the number of sensors (1) and the number of storage places of the store (6) is considerably greater than the number of sensors (1).

4. A circuit according to one of the preceding claims, characterised in that the number of the maximum possible counting steps of the precounter (16) is equal to the number of storage places of the store (6).

## Revendications

1. Circuit pour détecter des valeurs de mesure de diverses grandeurs physiques telles que par exemple la vitesse de rotation, l'accélération, la température, la pression des gaz auxquelles un projectile est soumis dans des dispositifs d'armes qui ne sont pas accessibles, caractérisé en ce que des capteurs (1) disposés dans le projectile saisissent les valeurs de mesure, ces valeurs de mesure sont inscrites selon un signal d'horloge par l'intermédiaire d'un convertisseur analogique/numérique (4) dans des emplacements d'une mémoire (6) du projectile et remplacées cycliquement par de nouvelles, et ensuite quand la valeur de mesure d'un capteur (1) sélectionné atteint une valeur de consigne, un précompteur excite selon la cadence du signal d'horloge et en commençant par un état de comptage préalablement établi jusqu'au report, en ce que lorsque le report est atteint l'inscription des valeurs de mesure dans la mémoire (6) prend fin, et en ce que finalement les valeurs de mesure mises dans les emplacements de mémoire sont transmises les unes après les autres par une antenne émettrice (9) d'un émetteur (8) du projectile.

2. Circuit selon la revendication 1, caractérisé en ce que le signal d'horloge excite un compteur de canaux (13) qui détermine par l'intermédiaire d'une autre mémoire (20) une subordination des valeurs de mesure détectées par les capteurs (1) par rapport aux emplacements de la mémoire (6).

3. Circuit selon la revendication 1 ou 2, caractérisé en ce que le nombre d'emplacements de mémoire de la mémoire (6) est adapté à celui du nombre de capteurs (1), et le nombre d'emplacements dans la mémoire (6) est sensiblement supérieur au nombre de capteurs (1).

4. Circuit selon l'une quelconque des revendications précédentes, caractérisé en ce que le nombre de pas de comptage maximal possible du précompteur (16) est égal au nombre d'emplacements de la mémoire (6).

5